# EUROPEAN PATENT SPECIFICATION

(11) **EP 3 390 505 B1**
(45) Date of publication and mention of the grant of the patent: **20.01.2021**
(21) Application number: 15910464.5
(22) Date of filing: 15.12.2015
(51) Int. Cl.: C08J 5/24

(54) **POLYURETHANE BASED RESINS FOR FILAMENT WINDING**
AUF POLYURETHAN BASIERENDE HARZE ZUR FILAMENTWICKLUNG
RÉSINES À BASE DE POLYURÉTHANE POUR L'ENROULEMENT DE FILAMENTS

(43) Date of publication of application: 24.10.2018
(73) Proprietor: Dow Global Technologies LLC, Midland, MI 48674 (US)
(72) Inventor: WANG, Beilei, Shanghai 201203 (CN); LI, Jiang, Shanghai 201203 (CN); DIENA, Paolo, 42015- Correggio (IT)
(74) Representative: Boult Wade Tennant LLP
(86) International application number: PCT/CN2015/097355
(87) International publication number: WO 2017/100991

(56) References cited:
- WO-A1-2014/170252
- CN-A- 1 447 832
- CN-A- 1 561 354
- CN-A- 102 105 946
- CN-A- 102 618 017
- CN-A- 103 298 862
- US-A- 4 724 250
- US-A- 4 752 513
- US-A1- 2003 176 561
- US-B2- 8 476 329

## Description

### Field

Embodiments relate to polyurethane based resins for filament winding, a process of manufacturing the polyurethane based resins, filament winding apparatus that include use of the polyurethane based resins, filament winding processes that include use of the polyurethane based resins, and a resin baths for filament winding processes that includes the polyurethane based resins.

### Introduction

An exemplary process for forming composite articles is filament winding, which process can be used for producing articles of various sizes. A filament winding process may include winding filaments under tension over a rotating substrate to form the composite article. The filaments may be fibers that include glass, aramid, carbon, boron, and/or other materials one of ordinary skill in the art would understand as being useable in a filament winding process. The fibers may be continuously passed through a resin bath, e.g., that includes polyester, vinyl-ester, phenolic, polyimide, epoxy, and/or polyurethane polymers, prior to being wound over the rotating substrate. Thereafter, the resin coated fibers may be cured, e.g., heat cured, to form the composite article. The filament winding process may be open to the environment and resins are sought that allow for long operation times under such conditions (e.g., that have a sufficiently low viscosity over an extended period at environmental conditions to allow for coating of the fibers and/or have a sufficient long gel time at environmental conditions).

### Summary

Embodiments may be realized by providing a polyurethane based filament winding resin reaction mixture comprises an isocyanate component including one or more isocyanates and an isocyanate-reactive component including from 5 wt% to 95 wt% of one of more polyols having a number average molecular weight from 50 g/mol to 8,000 g/mol, from 2 wt% to 30 wt% of one or more propane based triols, and from 1 wt% to 15 wt% of one or more triester phosphates, based on the total weight of the isocyanate-reactive component. A ratio of a total weight of the one or more propane based triols to a total weight of the one or more triester-phosphates is between above 1.1 and below 5.0, wherein the one or more propane based triols include trimethylolpropane.

### Brief Description of the Drawings

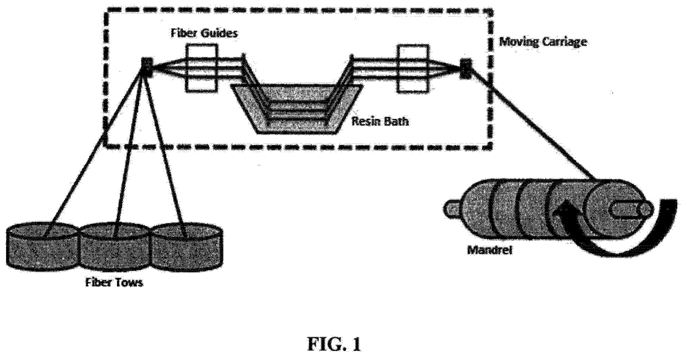

FIG. 1 illustrates an exemplary filament winding process.

### Detailed Description

Polyurethanes are highly versatile materials with a broad array of applications and uses. Polyurethanes may be prepared as an one-component system or a two-component system. Whereas, the one-component system may be a preformed (pre-reacted) curable polyurethane based composition that is included in the resin bath of a filament winding process. The two-component system may be a composition in which separate components are combined immediately before forming the resin bath or feed separately to form the resin bath, of a filament winding process. Both one-component and two-component polyurethane materials may be prepared by reacting an isocyanate material with an isocyanate-reactive material. For example, the polyurethane materials may be prepared by reacting an isocyanate component that includes one or more isocyanates, for which each isocyanate may be a polyisocyanate or an isocyanate-terminated prepolymer, with an isocyanate-reactive component that includes at least one material with an active hydrogen, such as a polyol. In exemplary embodiments, for a filament winding process, the isocyanate component and the isocyanate-reactive component may be separate components that are combined immediately before entering the resin bath to form a reaction mixture or feed separately to the resin bath to form a reaction mixture.

For a filament winding process, polyurethane based resins are sought that allow for long operation times, e.g., a reaction mixture viscosity at 25°C of less than 5,000 cps after 20 minutes and/or a high reaction mixture gel times of at least 25 minutes at room temperature. For example, for fiber wet-out filament winding process using a high glass fiber content, lower viscosities for the polyurethane based resins are sought for improved processability during the winding portion of the process. Further, for some high end applications, the strength requirement is important and the tensile strength of neat resin should be high (such as at least 55 MPa) and the flexural strength of the neat resin should be high (such as at least 70 MPa). However, with polyurethane materials there may be some conflicts between low viscosity and high mechanical properties. For example, use of low functionality and long chain polyols may provide a reduction in viscosity reduction, but the mechanical properties may be relatively poor. Further, use of high functionality and short chain polyols may provide for improved mechanical properties, but rapid polymer reactivity may lead to a rapid increase in viscosity, which can cause problems during a filament winding process. Accordingly, embodiments relate to a polyurethane based filament winding resin reaction mixture (for use in a resin bath) that provides good mechanical properties (e.g., tensile strength of at least 55 MPa and a flexural strength of at least 70 MPa) of the neat polyurethane resin, while still providing a reaction mixture viscosity at 25°C of less than 5,000 cps, twenty minutes after mixing the isocyanate component and the isocyanate-reactive component.

The polyurethane based filament winding resin reaction mixture is formed by using an isocyanate component and an isocyanate-reactive component. The isocyanate component includes one or more isocyanates. The isocyanate-reactive component includes from 5 wt% to 95 wt% of one of more polyols having a number average molecular weight from 50 g/mol to 8,000 g/mol. The one or more polyols may include one or more low molecular weight polyols and/or one or more natural oil derived polyols. The isocyanate-reactive component for includes from 2 wt% to 30 wt% of one or more propane based triols and from 1 wt% to 15 wt% of one or more triester-phosphates, based on the total weight of the isocyanate-reactive component. A ratio of a total weight of the one or more propane based triols to a total weight of the one or more triester-phosphates is between 1.1 and 5.0. The isocyanate component and/or the isocyanate-reactive component may further include additives. Of the additives, the polyurethane based filament winding resin reaction mixture may exclude low-viscosity solvents that act as viscosity cutters that are known in the art, such as propylene carbonate. The resin bath for the filament winding process may include from 50 wt% to 100 wt% (e.g., from 60 wt% to 100 wt%, from 70 wt% to 100 wt%, from 80 wt% to 100 wt%, from 90 wt% to 100 wt%, from 95 wt% to 100 wt%, etc.) of the polyurethane based filament winding resin reaction mixture.

### Isocyanate Component

The isocyanate component includes at least one isocyanate, such as at least one polyisocyanate and/or at least one isocyanate terminated prepolymer derived from at least one polyisocyanate. In exemplary embodiments, the isocyanate component may include additional additives.

Exemplary polyisocyanates include aromatic, cycloaliphatic, and aliphatic polyisocyanates. For example, polyisocyanates known in the art may be used. Examples of polyisocyanates include the 4,4'-, 2,4' and 2,2'-isomers of methane diphenyl diisocyante (MDI), modifications, and blends thereof (e.g., polymeric or monomeric MDI blends), 2,4- and 2,6-isomers of toluene-diisocyante (TDI) (e.g., modifications, and blends thereof), m- and p-phenylenediisocyanate, chlorophenylene-2,4-diisocyanate, diphenylene-4,4'-diisocyanate, 4,4'-diisocyanate-3,3'-dimethyldiphenyl, 3-methyldiphenyl-methane-4,4'-diisocyanate, diphenyletherdiisocyanate, 2,4,6-triisocyanatotoluene, 2,4,4'-triisocyanatodi phenylether, ethylene diisocyanate, and 1,6-hexamethylene diisocyanate. Derivatives of any of the foregoing polyisocyanate groups that contain, e.g., biuret, urea, carbodiimide, allophonate, and/or isocyanurate groups, may be used. In exemplary embodiments, the isocyanate component includes from 20 wt% to 100 wt% (e.g., 30 wt% to 100 wt%, 50 wt% to 100 wt%, 70 wt% to 100 wt%, 80 wt% to 100 wt%, 90 wt% to 100 wt%, 95 wt% to 100 wt%, etc.) of polymeric MDI.

If included, the isocyanate-terminated prepolymer may have a free isocyanate group (NCO) content of 1 wt% to 35 wt% (e.g., 5 wt% to 30 wt%, 10 wt% to 30 wt%, 15 wt% to 25 wt%, 15 wt% to 20 wt%, etc.), based on the total weight of the prepolymer. If present, one or more isocyanate terminated prepolymers may account for 20 wt% to 100 wt% of the isocyanate component, and a remainder (if present) of the isocyanate component may be one or more polyisocyanates and/or one or more additives. The isocyanate-terminated prepolymer may be formed by the reaction of another isocyanate component with another isocyanate-reactive component (both different and separate from the isocyanate-component and isocyanate-reactive component for forming the reaction mixture), in which the isocyanate component is present in stoichiometric excess.

An isocyanate index for forming the cured composition is from 85 to 150 (e.g., from 90 to 130, from 90 to 120, from 90 to 110). By isocyanate index, it is meant a ratio of equivalents of isocyanate groups in the reaction mixture for forming the cured composition to the active hydrogen atoms in the reaction mixture for forming the cured composition, for forming the polyurethane polymers, multiplied by 100. Said in another way, the isocyanate index is the molar equivalent of isocyanate (NCO) groups divided by the total molar equivalent of isocyanate-reactive hydrogen atoms present in a formulation, multiplied by 100. As would be understood by a person of ordinary skill in the art, the isocyanate groups in the reaction mixture for forming the cured composition may be provided through the isocyanate component, and the active hydrogen atoms may be provided through the isocyanate reactive component.

### Polyols

The isocyanate-reactive component includes from 5 wt% to 95 wt% of one or more polyols, based on the total weight of the isocyanate-reactive component. Each polyol has a number average molecular weight from 50 g/mol to 8,000 g/mol. The polyols contain active hydroxyl groups, the reaction of which active hydroxyl groups with isocyanate moieties results in the formation of urethane linkage. The one or more polyols may include one or more polyether polyols, one or more polyester polyols, and/or one or more natural oil derived polyols. Each polyether polyol may be derived from propylene oxide, ethylene oxide, and/or butylene oxide.

According to exemplary embodiments, the one or more polyols may include at one or more low molecular weight polyether polyols. For example, a number average molecular weight of each of the one or more low molecular weight polyether polyols may be from 50 g/mol to 1000 g/mol (e.g., from 50 g/mol to 700 g/mol, from 50 g/mol to 500 g/mol, from 50 g/mol to 400 g/mol, from 50 g/mol to 300 g/mol, etc.) Each low molecular weight polyether polyol may have a nominal hydroxyl functionality from 2 to 4 (e.g., may be a diol or triol). Each low molecular weight polyether polyol may be derived from propylene oxide, ethylene oxide, and/or butylene oxide. For example, the low molecular weight polyether polyol may be a triol derived from propylene oxide. The one or more low molecular weight polyols may account for 5 wt% to 60 wt% (e.g., 10 wt% to 50 wt%, 15 wt% to 45 wt%, 15 wt% to 40 wt%, 15 wt% to 35 wt%, 20 wt% to 35 wt%, 20 wt% to 30 wt%, etc.) of the total weight of the isocyanate-reactive component.

The one or more polyols may include one or more simple polyols, such as glycols. Exemplary simple polyols include glycerin, ethylene glycol, diethylene glycol, propylene glycol, dipropylene glycol, butanediol, hexanediol, sorbitol, and sucrose. The one or more simple polyols may be different from (separated provided from) the propane based triol. Exemplary simple polyols include polyether polyol initiators known to one of ordinary skill in the art, crosslinkers having a polyol structure known to one of ordinary skill in the art, and/or chain extenders having a polyol structure known to one of ordinary skill in the art. The one or more simple polyols may account for 1 wt% to 20 wt% (e.g., 1 wt% to 15 wt%, 1 wt% to 10 wt%, 1 wt% to 8 wt%, 2 wt% to 7 wt%, etc.) of the total weight of the isocyanate-reactive component.

The one or more polyols may include one or more natural oil derived polyols. Exemplary natural oil derived polyols include castor oil (and polyols derived therefrom), cardanol (and polyols derived therefrom), and/or vegetable derived polyols (such as polyols derived from soybeans).

For example, the natural oil derived polyol may be di- and/or tri-glycerides of aliphatic carboxylic acids of 10 carbon atoms or more, e.g., triglycerides of hydroxyl-substituted aliphatic carboxylic acids. An example is castor oil, which is a vegetable oil obtained from the castor seed/plant. A majority of the fatty acids in castor oil may be ricinoleate/ricinoleic acid (i.e., 12-hydroxy-9-*cis*-octadecenoic acid), which can be referred to as a monounsaturated, 18-carbon fatty acid having a hydroxyl functional group at the twelfth carbon. This functional group causes ricinoleic acid (and castor oil) to be polar, e.g., having polar dielectric with a relatively high dielectric constant (4.7) for highly refined and dried castor oil. An exemplary castor oil may include at least 85 wt% of ricinoleic acid (12-hydroxyoleic acid) and minor amounts of linoleic acid, oleic acid, stearic acid, palmitic acid, dihydroxystearic acid, linolenic acid, elcosanoic acid, and/or water. Castor oil may have a true hydroxyl functionality of approximately 2.64 and an equivalent weight of approximately 342. The castor oil may be modified or unmodified, e.g., modified castor oil may contain an additive such as a formaldehyde or polyester polyol. The natural oil hydrophobic polyol (such as castor oil) may account for 10 wt% to 80 wt% (e.g., 10 wt% to 70 wt%, 20 wt% to 60 wt%, 30 wt% to 55 wt%, 35 wt% to 55 wt%, 40 wt% to 55 wt%, 45 wt% to 55 wt%, etc.) of the total weight of the isocyanate-reactive component.

For example, the cardanol may be included within cashew nutshell liquid, which may be that may be a by-product of cashew nut processing (e.g., may be extracted from a layer between a nut and a shell of a cashew nut). The cashew nutshell liquid may include a cardanol content of at least 50 wt%, based on a total weight of the cashew nutshell liquid. The cashew nutshell liquid may include cardanol as a primary component and may additionally include cardol, methylcardol, and/or anacardic acid as secondary components.

The one or more polyols may include may include other polyols, such as a hydroxyl-terminated polybutadiene and/or a polytetramethylene ether glycol (PTMEG).

In exemplary embodiments, the one or more polyols includes a blend of (i) one or more polyether polyols having a number average molecular weight greater than 175 g/mol and less than 1000 g/mol, and a nominal hydroxyl functionality from 2 to 3, and (ii) one or more natural oil polyols. For example, the one or more polyols may include a blend of (i) from 1 wt% to 15 wt% of a simple polyol having a number average molecular weight from 50 g/mol to 175 g/mol and a nominal hydroxyl functionality from 2 to 3, (ii) from 10 wt% to 40 wt% of a polyether polyol having a number average molecular weight greater than 175 g/mol and less than 1000 g/mol, and a nominal hydroxyl functionality from 2 to 3, and (iii) from 20 wt% to 60 wt% of a natural oil polyol that includes castor oil.

### Propane Based Triol

The isocyanate-reactive component includes from 2 wt% to 30 wt% (e.g., from 2 wt% to 25 wt%, from 5 wt% to 20 wt%, from 5 wt% to 15 wt%, etc.) of one or more propane based triols, wherein the one or more propane based triols include trimethylolpropane. By propane based triol it is meant a compound that is a triol and can be identified by conventional naming protocol as a substituted propane base structure so as to allow for the triol functionality. Exemplary propane based triols include trimethylolpropane. In exemplary embodiments, 2 wt% to 30 wt% (e.g., from 2 wt% to 25 wt%, from 5 wt% to 20 wt%, from 5 wt% to 15 wt%, etc.) of trimethylolpropane may be included, based on the total weight of the isocyanate-reactive component (e.g., the one or more propane based triols may include only trimethylolpropane).

### Triester-Phosphates

The isocyanate-reactive component includes from 1 wt% to 15 wt% (e.g., from 1 wt% to 10 wt%, from 2 wt% to 9 wt%, from 2 wt% to 7 wt%, from 3.0 wt% to 7 wt%, etc.) of one or more triester-phosphates. Exemplary triester-phosphates include triethylphosphate, trimethylphosphate, and tripropylphosphate. In exemplary embodiments, 1 wt% to 15 wt% (e.g., from 1 wt% to 10 wt%, from 2 wt% to 9 wt%, from 2 wt% to 7 wt%, from 3.0 wt% to 7 wt%, etc.) of triethylphosphate may be included, based on the total weight of the isocyanate-reactive component (e.g., the one or more trimester-phosphates may include only triethylphosphate).

A ratio of a total weight of the one or more propane based triols to a total weight of the one or more triester-phosphates in the isocyanate-reactive component is between above 1.1 and below 5.0 (e.g., from 1.2 to 4.9, from 1.5 to 4.5, from 2.0 to 4.5, from 2.0 to 4.0, from 2.4 to 3.5, from 2.4 to 3.1, from 2.5 to 3.0, etc.) For example, a ratio of trimethylolpropane and triethylphosphate is between 1.1 and 5.0 (e.g., from 1.2 to 4.9, from 1.5 to 4.5, from 2.0 to 4.5, from 2.0 to 4.0, from 2.4 to 3.5, from 2.4 to 3.1, from 2.5 to 3.0, etc.)

### Additives

Various additives may be added to the polyurethane based filament winding resin reaction mixture to adjust characteristics of the resultant resin, e.g., additives known to those of ordinary skill in the art may be used. Additives may be added as part of the isocyanate component and/or the isocyanate-reactive component. Exemplary additives include a moisture scavenger, an antifoaming agent, a catalyst, a chain extender (other than polyols), an adhesion promoter, phosphoric acid, a curative, a pH neutralizer, a plasticizer, a compatibilizer, a filler (such as functional fillers, silica based fillers, and mineral based fillers), pigments/dyes, and/or a crosslinker (other than polyols). Exemplary additives that may be excluded include known low-viscosity solvents that act as viscosity cutters, such as propylene carbonate and/or trichloropropylphosphate. Alternatively, known low-viscosity solvents that act as viscosity cutters, such as propylene carbonate and/or trichloropropylphosphate, may be included in a low amount (e.g., in an amount of less than 20 wt%, less than 10 wt%, less than 5 wt%, and/or less than 1 wt%, based on the total weight of the isocyanate-reactive component).

A moisture scavenger component may be added that includes one or more moisture scavengers, e.g., may be added to the isocyanate-reactive component. If included, the moisture scavenger component may account for 1 wt% to 20 wt% (e.g., 2 wt% to 15 wt%, 2 wt% to 10 wt%, 3 wt% to 9 wt%, 4 wt% to 8 wt%, etc.) of the total weight of the isocyanate-reactive component. Exemplary moisture scavengers include zeolites or molecular sieves, reactive silanes (such as vinyltrialkoxysilanes), and minerals (such as calcium oxide).

An antifoaming agent component may be added that includes one or more antifoaming agents, e.g., may be added to the isocyanate-reactive component. If included, the antifoaming agent component may account for less than 5 wt% (e.g., less than 1 wt%, etc.) of the total weight of the isocyanate-reactive component. As discussed in International Publication No. WO 2008/065090, the antifoaming agent may also act as a viscosity cutter.

Phosphoric acid may be added, e.g., may be added to the isocyanate-reactive component. If included, the phosphoric acid may account for less than 1 wt% of the total weight of the isocyanate-reactive component. For a filament winding resin reaction mixture, the phosphoric acid may help reduce the pH value of the isocyanate-reactive component and/or the reaction mixture, which can delay the reactivity. Accordingly, the operation time for the filament winding process may be increased.

A catalyst component may be added that includes one or more catalysts, e.g., may be added to the isocyanate-reactive component. For example, the catalyst component may have tin and/or amine based catalysts, e.g., that accounts for less than 5 wt% of a total weight of the isocyanate-reactive component. Examples of catalysts include tertiary amines, tin carboxylates, organotin compounds, tertiary phosphines, various metal chelates, and/or metal salts of strong acids (such as ferric chloride, stannic chloride, stannous chloride, antimony trichloride, bismuth nitrate, and bismuth chloride).

A chain extender component may be added that includes one or more chain extender (that are not polyols), e.g., may be added to the isocyanate-reactive component. If included, the chain extender component may be account for less than 25 wt% of the total weight of the isocyanate-reactive component.

An adhesion promoter component may be added that includes one or more adhesion promoters, e.g., may be added to the isocyanate-reactive component. For example, the adhesion promoter component may include at least one silane based adhesion promoter. If included, the optional adhesion promoter may account for less than 5 wt% of a total weight of the isocyanate-reactive component.

Fillers may be present to provide desired rheological properties, mechanical reinforcement, chemical resistance, and/or reduce cost. The fillers may be added to the isocyanate-reactive component and/or the isocyanate component. Examples of fillers include inorganic particulate materials such as talc, titanium dioxide, calcium carbonate, calcium oxide, silica, mica, wollastonite, fly ash, metal particles, carbon black, graphite, high melting organic polymers, and/or reinforcements. Fillers also include reinforcements type fillers, e.g., flake or milled glass and/or fumed silica, which may be used to impart certain properties. Fillers may constitute up to 90% by weight of the curable composition.

A plasticizer may be present. The plasticizer may enable higher filler loading, reduce cost, and/or reduce modulus. Examples of suitable plasticizers include liquid (at 25°C) esters of monocarboxylic acids and diesters of dicarboxylic acids having molecular weights of up to 300 g/mol.

Pigment and/or dyes may be present, e.g., titanium dioxide and/or carbon black, may be used to impart color properties. Other additives include, e.g., UV stabilizers, antioxidants, and air release agents, which may be independently used depending on the desired characteristics.

### Resin Bath for Filament Winding

The individual components of the polyurethane based filament winding resin reaction mixture, such as the isocyanate-reactive component may be mixed prior to being added to the resin bath. Further, the polyurethane based filament winding resin reaction mixture may be mixed within the resin bath and/or prior to being added to the resin bath. Mixing may be done in any convenient manner, depending on the particular application and available equipment. Mixing of the components may be done batchwise, mixing by hand, or by using various kinds of batch mixing devices.

In the case in which the ingredients are formulated into two components (e.g., separate isocyanate-component and isocyanate-reactive component), the components may be combined at ambient temperature or any desirable elevated temperature within the resin bath, coated on filaments, and/or allowed to react and then cure. The two components may be packaged into separate cartridges and simultaneously dispensed through a mixing device to mix and deposit in the resin bath.

### Filament Winding

Filament winding is used for the production of composites, e.g., based on a crosslinking matrix of filaments and polyurethane based resins. In a filament winding operation using the polyurethane resin according to embodiments, a filament may be passed through the resin bath and/or the resin bath may passed through an injection die be applied to the filament to form coated filaments. Then, the coated filaments may be wound around a substrate. The polyurethane resin may be a one component system (e.g., the isocyanate component and the isocyanate-reactive component are mixed to form the resin bath and then applied to the filament) or a two-component system (e.g., the isocyanate component and the isocyanate-reactive component are separately applied to the filament). The resultant product may be cured (e.g., by the application of heat and/or radiation) in order to form a final composite article.

Referring to FIG. 1, an exemplary filament winding process includes Fiber Tows that house filaments/fibers used in the filament winding process. Exemplary filaments include glass fibers (e.g., E-glass, S-glass, and the like.), carbon fibers (e.g., polyacrylonitrile-based and pitchbased), aramid fibers, ceramic fibers (e.g., silicon carbide, aluminum oxide, and the like), or mixtures thereof. The filaments/fibers are feed from the Fiber Tows to Fiber Guides, which are used to arrange the filaments/fibers. From the Fiber Guides, the filaments/fibers are soaked in the Resin Bath. According to exemplary embodiments, the Resin Bath includes a polyurethane based filament winding resin reaction mixture, as described herein. From the Resin Bath, coated filaments/fibers are based through additional Fiber Guides. The combination of the Fiber Guides and the Resin Bath form the Moving Carriage of the exemplary filament winding process. After exiting the Moving Carriage, the coated filaments/fibers are coated around a moving Mandrel (substrate).

For example, the filaments/fibers are wetted by the resin bath (through soaking or use of the injection die) and wound around a substrate (such as the Mandrel shown in FIG. 1) that defines the shape of the final composite article. The wetting of the filament may take place either prior to or concurrently with the winding operation. For example, the filament may be wetted on a continuous basis by a one-component polyurethane resin just before it is wound around the substrate. The winding operation may be accomplished by rotating the substrate while the coated filament is under a controlled amount of tension, and moving the filament up and down the length of the mandrel in any desired pattern. During the winding operation, it is important to minimize the formation of voids or gaps in the filament wound article and to control the degree of wetting of the filament (better wetting is preferred in most applications). For example, the coating of the resin on the filament and the winding operation should both take place while the resin is still flowable (e.g., should be homogeneous and separation of solids or gel particles from the liquid bulk of the resin is minimal).

With respect to gel time of the resin, a balance may be realized between the need for a quick cure time to form the final composition article, the need for adequate flowability of the resin during the process of forming the composite material, and the need to prevent excessive wasteful flow of the polyurethane resin during the winding operation. The balance may be achieved by having a gel time that is from 25 minutes to 150 minutes.

All percentages are by weight, unless indicated otherwise. All values for molecular weight are based on number average molecular weight, unless indicated otherwise.

### Examples

Approximate properties, characters, parameters, etc., are provided below with respect to various working examples, comparative examples, and the materials used in the working and comparative examples.

The following materials are principally used for the isocyanate-reactive components and the isocyanate components shown in Table 1, below:
- TPP: Trimethylolpropane, which is propane based triol (available from Hengfeng).
- TEP: Triethylphosphate, which is the triester of ethanol and phosphoric acid (available from Jiangsu Yoke).
- Castor oil: A natural oil derived polyol (available from Sinopharm).
- Polyether Polyol: A glycerine propoxylated triol, having a number average molecular weight of 255 (available from The Dow Chemical Company as VORANOL™ CP 260).
- DPG: Dipropylene glycol, which may act as a crosslinker (available from Sinopharm).
- Zeolite: A molecular sieve powder (available from W.R. Grace & Company as SYLOSIV® Molecular Sieve Powders).
- Additive: A silicone and polymeric defoamer (available from Byk as BYK® A-530).
- Propylene Carbonate: A viscosity cutter that is a carbonate ester derived from propylene glycol (available from Sinopharm).

- Isocyanate: Polymeric methylene diphenyl diisocyanate, also referred to as PMDI (available from The Dow Chemical Company as SpecFlex™ NS 540).

Working Examples 1 to 3 and Comparative Examples A to D are prepared according to the formulations in Table 1, below.

**Table 1**

| | **Working Ex. 1** | **Working Ex. 2** | **Working Ex. 3** | **Comp. Ex. A** | **Comp. Ex. B** | **Comp. Ex. C** | **Comp. Ex. D** |
|---|---|---|---|---|---|---|---|
| **Isocyanate-Reactive Component** (wt%) | | | | | | | |
| TPP | 9.0 | 11.0 | 15.0 | 6.0 | 10.0 | 11.0 | 11.0 |
| TEP | 3.0 | 4.0 | 6.0 | -- | 2.0 | 10.0 | -- |
| Castor Oil | 48.8 | 48.8 | 48.8 | 48.8 | 48.8 | 48.8 | 48.8 |
| Polyether Polyol | 27.0 | 25.0 | 23.0 | 30.0 | 27.0 | 23.0 | 25.0 |
| DPG | 5.0 | 4.0 | -- | 5.0 | 5.0 | -- | 4.0 |
| Zeolite | 7.0 | 7.0 | 7.0 | 10.0 | 7.0 | 7.0 | 7.0 |
| Additive | 0.2 | 0.2 | 0.2 | 0.2 | 0.2 | 0.2 | 0.2 |
| Phosphoric Acid | < 0.1 | < 0.1 | < 0.1 | < 0.1 | < 0.1 | < 0.1 | < 0.1 |
| Propylene Carbonate | -- | -- | -- | -- | -- | -- | 4.0 |

| **Isocyanate Component** (Isocyanate Index) | | | | | | | |
|---|---|---|---|---|---|---|---|
| Isocyanate | 101 | 101 | 101 | 101 | 101 | 101 | 101 |

| **Properties** | | | | | | | |
|---|---|---|---|---|---|---|---|
| Ratio of TPP : TEP | 3.0 | 2.8 | 2.5 | -- | 5.0 | 1.1 | -- |
| Mixture Viscosity at 25°C, 20 minutes after mixing (cps) | 1600 | 1400 | 1900 | > 5000 | 1900 | 1200 | 1800 |
| Gel time at room temperature (min) | 24 | 28 | 27 | 23 | 23 | 29 | 26 |
| Tensile strength (MPa) | 63 | 63 | 65 | 60 | 67 | 47 | 56 |
| Flexural strength (MPa) | 93 | 93 | 92 | 78 | 78 | 53 | 68 |

Referring to Table 1, each of Working Examples 1 to 3, provide a desirable viscosity, gel time, tensile strength, and flexural strength, e.g., so as to be usable as a resin bath in a filament winding process. Referring to Comparative Example A, it is seen that without both TPP and TEP, the resultant viscosity of the reaction mixture after twenty minutes is too high (i.e., greater than 5000 cps) such that the formulation may not be preferred for use as a resin bath in a filament winding process. Referring to Comparative Example B, at a higher ratio of TPP to TEP, a decrease in the flexural strength may be realized such that properties of the resultant filament wound article may be adversely affected. Referring to Comparative Example C, at a lower ratio of TPP to TEP, lower than desirable tensile strength and flexural strength may be realized such that properties of the resultant filament wound article may be adversely affected. Accordingly, referring to Comparative Examples B and C, a ratio of TPP to TEP may be between 1.1 and 5.0. Further, referring to Comparative Example D, when TEP is replaced with propylene carbonate (as a known viscosity cutter), lower than desirable tensile strength and flexural strength may be realized such that properties of the resultant filament wound article may be adversely affected.

The ratio of TPP to TEP is a calculated ratio of the weight percent of TPP in the Isocyanate-Reactive Component to the weight percent of TEP in the Isocyanate-Reactive Component. Viscosity is a measure of the formulation's resistance to gradual deformation by shear stress or tensile stress. Here, firstly the materials in of the Isocyanate-Reactive Component are in a Flacktek speed mixing cup for 3 minutes at 2000 rpm. Secondly, the pre-blended Isocyanate-Reactive Component and the Isocyanate Component are mixed for three minutes in the Flacktek speed mixing cup at 500 rpm to form a reaction mixture. After twenty (20) minutes, 3 grams of the reaction mixture is used to measure viscosity using an ARES-G2 Rheology meter available from TA Instruments. A high viscosity, such as greater than 5,000 cps, is an indication of poor storage stability and/or ineffective of use of the formulation as a resin bath in a filament winding process.

Gel time is measured as the time at which the reaction mixture is substantially incapable of flow, and in molecular terms gel time refers to the point at which an infinite network is formed. Gel time is determined as the interval between the time that the reactive components are first mixed to form a reacting liquid mixture until the reacting liquid mixture becomes incapable of flow, e.g., the material has built enough molecular weight to transition from a liquid to a solid. Gel time is measured at room temperature (approximately 23°C) using a Gardner Standard Model Gel Timer. A high gel time, e.g., of at least 25 minutes, is sought for reaction mixtures useable as a resin bath in a filament winding process.

Mechanical properties, such as tensile strength and flexural strength, are measured by casting the reaction mixture in a mold and allowing curing for two hours at 120 °C (such that the mechanical properties are measured of the neat resin). Then, the resultant samples are cooled, demolded, and cut into dumbbell shapes for testing according to ASTM and/or ISO methods. Tensile strength, which is the rupture strength (stress/strain product at break) per unit area of the material, is measured according to the ISO 527 Standard. Flexural strength, which is the measure of the ability of a material to withstand failure due to bending, is measured according to the ASTM D-790 method.

## Claims

1. A polyurethane based filament winding resin reaction mixture, the reaction mixture comprising:
an isocyanate component including one or more isocyanates; and
an isocyanate-reactive component including from 5 wt% to 95 wt% of one of more polyols having a number average molecular weight from 50 g/mol to 8,000 g/mol, from 2 wt% to 30 wt% of one or more propane based triols, and from 1 wt% to 15 wt% of one or more triester-phosphates, based on the total weight of the isocyanate-reactive component, a ratio of a total weight of the one or more propane based triols to a total weight of the one or more triester-phosphates being between above 1.1 and below 5.0, wherein the one or more propane based triols includes trimethylolpropane.

2. The polyurethane based filament winding resin reaction mixture as claimed in claim 1, wherein the mixture having a viscosity at 25°C of less than 5,000 cps, twenty minutes after mixing the isocyanate component and the isocyanate-reactive component.

3. The polyurethane based filament winding resin reaction mixture as claimed in claim 1 or claim 2, wherein the one or more triester-phosphates includes triethylphosphate.

4. The polyurethane based filament winding resin reaction mixture as claimed in any one of claims 1 to 3, wherein the one or more polyols includes (i) a polyether polyol having a number average molecular weight greater than 175 g/mol and less than 1000 g/mol, and a nominal hydroxyl functionality from 2 to 3, and (ii) a natural oil polyol.

5. The polyurethane based filament winding resin reaction mixture as claimed in any one of claims 1 to 3, wherein the one or more polyols includes (i) from 1 wt% to 15 wt% of a simple polyol having a number average molecular weight from 50 g/mol to 175 g/mol and a nominal hydroxyl functionality from 2 to 3, (ii) from 10 wt% to 40 wt% of a polyether polyol having a number average molecular weight greater than 175 g/mol and less than 1000 g/mol, and a nominal hydroxyl functionality from 2 to 3, and (iii) from 20 wt% to 60 wt% of a natural oil polyol that includes castor oil.

6. The polyurethane based filament winding resin reaction mixture as claimed in any one of claims 1 to 5, wherein an isocyanate index is from 85 to 150.

7. The polyurethane based filament winding resin reaction mixture as claimed in any one of claims 1 to 6, wherein the isocyanate-reactive component further includes phosphoric acid.

8. A resin bath for a filament winding process, the resin bath including the polyurethane based filament winding resin reaction mixture as claimed in any one of claims 1 to 7.

9. A filament winding apparatus, the apparatus comprising:
glass fiber filaments;
a resin bath include the polyurethane based filament winding resin reaction mixture as claimed in any one of claims 1 to 7, the resin bath being applied to the glass fiber filaments to form coated glass fiber filaments; and
a substrate for forming a composite article using the coated glass fiber filaments.

## Patentansprüche

1. Eine auf Polyurethan basierende Reaktionsmischung aus Harz für ein Filamentwickelverfahren, wobei die Reaktionsmischung Folgendes beinhaltet:
eine Isocyanatkomponente, die ein oder mehrere Isocyanate umfasst; und
eine isocyanatreaktive Komponente, die zu 5 Gew.-% bis 95 Gew.-% ein oder mehrere Polyole mit einem gewichtsmittleren Molekulargewicht von 50 g/mol bis 8 000 g/mol, zu 2 Gew.-% bis 30 Gew.-% ein oder mehrere auf Propan basierende Triole und zu 1 Gew.-% bis 15 Gew.-% ein oder mehrere Triesterphosphate, bezogen auf das Gesamtgewicht der isocyanatreaktiven Komponente, umfasst, wobei ein Verhältnis eines Gesamtgewichts des einen oder der mehreren auf Propan basierenden Triole zu einem Gesamtgewicht des einen oder der mehreren Triesterphosphate zwischen über 1,1 und unter 5,0 liegt, wobei das eine oder die mehreren auf Propan basierenden Triole Trimethylolpropan umfassen.

2. Auf Polyurethan basierende Reaktionsmischung aus Harz für ein Filamentwickelverfahren gemäß Anspruch 1, wobei die Mischung eine Viskosität bei 25 °C von weniger als 5 000 cps, fünfundzwanzig Minuten nach dem Mischen der Isocyanatkomponente und der isocyanatreaktiven Komponente, aufweist.

3. Auf Polyurethan basierende Reaktionsmischung aus Harz für ein Filamentwickelverfahren gemäß Anspruch 1 oder Anspruch 2, wobei das eine oder die mehreren Triesterphosphate Triethylphosphat umfassen.

4. Auf Polyurethan basierende Reaktionsmischung aus Harz für ein Filamentwickelverfahren gemäß einem der Ansprüche 1 bis 3, wobei das eine oder die mehreren Polyole (i) ein Polyetherpolyol mit einem gewichtsmittleren Molekulargewicht von mehr als 175 g/mol und weniger als 1 000 g/mol und einer nominalen Hydroxylfunktionalität von 2 bis 3 und (ii) ein Polyol aus natürlichem Öl umfassen.

5. Auf Polyurethan basierende Reaktionsmischung aus Harz für ein Filamentwickelverfahren gemäß einem der Ansprüche 1 bis 3, wobei das eine oder die mehreren Polyole (i) zu 1 Gew.-% bis 15 Gew.-% ein einfaches Polyol mit einem gewichtsmittleren Molekulargewicht von 50 g/mol bis 175 g/mol und einer nominalen Hydroxylfunktionalität von 2 bis 3, (ii) zu 10 Gew.-% bis 40 Gew.-% ein Polyetherpolyol mit einem gewichtsmittleren Molekulargewicht von mehr als 175 g/mol und weniger als 1000 g/mol und einer nominalen Hydroxylfunktionalität von 2 bis 3 und (iii) zu 20 Gew.-% bis 60 Gew.-% ein Polyol aus natürlichem Öl, das Rizinusöl umfasst, umfassen.

6. Auf Polyurethan basierende Reaktionsmischung aus Harz für ein Filamentwickelverfahren gemäß einem der Ansprüche 1 bis 5, wobei ein Isocyanatindex 85 bis 150 beträgt.

7. Auf Polyurethan basierende Reaktionsmischung aus Harz für ein Filamentwickelverfahren gemäß einem der Ansprüche 1 bis 6, wobei die isocyanatreaktive Komponente ferner Phosphorsäure umfasst.

8. Ein Harzbad für einen Vorgang eines Filamentwickelverfahrens, wobei das Harzbad die auf Polyurethan basierende Reaktionsmischung aus Harz für ein Filamentwickelverfahren gemäß einem der Ansprüche 1 bis 7 umfasst.

9. Eine Vorrichtung für ein Filamentwickelverfahren, wobei die Vorrichtung Folgendes beinhaltet:
Glasfaserfilamente;
ein Harzbad, das die auf Polyurethan basierende Reaktionsmischung aus Harz für ein Filamentwickelverfahren gemäß einem der Ansprüche 1 bis 7 umfasst, wobei das Harzbad auf die Glasfaserfilamente aufgebracht wird, um beschichtete Glasfaserfilamente zu bilden; und
ein Substrat zum Bilden eines Verbundstoffartikels unter Verwendung der beschichteten Glasfaserfilamente.

## Revendications

1. Un mélange réactionnel de résine pour enroulement de filament à base de polyuréthane, le mélange réactionnel comprenant :
un constituant isocyanate incluant un ou plusieurs isocyanates ; et
un constituant réactif aux isocyanates incluant de 5 % en poids à 95 % en poids d'un ou
de plusieurs polyols ayant une masse moléculaire moyenne en nombre allant de 50 g/mol à 8 000 g/mol, de 2 % en poids à 30 % en poids d'un ou de plusieurs triols à base de propane, et de 1 % en poids à 15 % en poids d'un ou de plusieurs triester-phosphates, rapporté au poids total du constituant réactif aux isocyanates, un rapport d'un poids total des un ou plusieurs triols à base de propane sur un poids total des un ou plusieurs triester-phosphates étant compris entre au-dessus de 1,1 et en dessous de 5,0, dans lequel les un ou plusieurs triols à base de propane incluent du triméthylolpropane.

2. Le mélange réactionnel de résine pour enroulement de filament à base de polyuréthane tel que revendiqué dans la revendication 1, le mélange ayant une viscosité à 25 °C inférieure à 5 000 cps, vingt minutes après avoir mélangé le constituant isocyanate et le constituant réactif aux isocyanates.

3. Le mélange réactionnel de résine pour enroulement de filament à base de polyuréthane tel que revendiqué dans la revendication 1 ou la revendication 2, dans lequel les un ou plusieurs triester-phosphates incluent du triéthylphosphate.

4. Le mélange réactionnel de résine pour enroulement de filament à base de polyuréthane tel que revendiqué dans n'importe laquelle des revendications 1 à 3, dans lequel les un ou plusieurs polyols incluent (i) un polyol de polyéther ayant une masse moléculaire moyenne en nombre supérieure à 175 g/mol et inférieure à 1 000 g/mol, et une fonctionnalité hydroxyle nominale allant de 2 à 3, et (ii) un polyol d'huile naturelle.

5. Le mélange réactionnel de résine pour enroulement de filament à base de polyuréthane tel que revendiqué dans n'importe laquelle des revendications 1 à 3, dans lequel les un ou plusieurs polyols incluent (i) de 1 % en poids à 15 % en poids d'un polyol simple ayant une masse moléculaire moyenne en nombre allant de 50 g/mol à 175 g/mol et une fonctionnalité hydroxyle nominale allant de 2 à 3, (ii) de 10 % en poids à 40 % en poids d'un polyol de polyéther ayant une masse moléculaire moyenne en nombre supérieure à 175 g/mol et inférieure à 1 000 g/mol, et une fonctionnalité hydroxyle nominale allant de 2 à 3, et (iii) de 20 % en poids à 60 % en poids d'un polyol d'huile naturelle qui inclut l'huile de ricin.

6. Le mélange réactionnel de résine pour enroulement de filament à base de polyuréthane tel que revendiqué dans n'importe laquelle des revendications 1 à 5, dans lequel un indice isocyanate va de 85 à 150.

7. Le mélange réactionnel de résine pour enroulement de filament à base de polyuréthane tel que revendiqué dans n'importe laquelle des revendications 1 à 6, dans lequel le constituant réactif aux isocyanates inclut en outre l'acide phosphorique.

8. Un bain de résine pour un procédé d'enroulement de filament, le bain de résine incluant le mélange réactionnel de résine pour enroulement de filament à base de polyuréthane tel que revendiqué dans n'importe laquelle des revendications 1 à 7.

9. Un appareil d'enroulement de filament, l'appareil comprenant :
des filaments de fibre de verre ;
un bain de résine inclut le mélange réactionnel de résine pour enroulement de filament à base de polyuréthane tel que revendiqué dans n'importe laquelle des revendications 1 à 7, le bain de résine étant appliqué sur les filaments de fibre de verre afin de former des filaments de fibre de verre enduits ; et
un substrat pour former un article composite à l'aide des filaments de fibre de verre enduits.
